# EUROPEAN PATENT APPLICATION

(11) **EP 1 211 607 A2**
(43) Date of publication of application: **05.06.2002**
(21) Application number: 01309787.8
(22) Date of filing: 21.11.2001
(51) Int. Cl.: G06F 17/24

(54) **Automated document drafting system and method**

(30) Priority: 21.11.2000 US 718079
(71) Applicant: GENERAL ELECTRIC COMPANY, Schenectady, NY 12345 (US)
(72) Inventor: Rowley, Daniel Agnew, Houston, Texas 77079 (US); Armstrong, Renee Kathleen, Houston, Texas 77078 (US)
(74) Representative: Goode, Ian Roy

(57) **Abstract**

A system for document drafting comprises a document model selector (s1) that selects a document model to be drafted; a terms and conditions selector (s2-s4) that selects and places terms and conditions in the document model; and a transmission device (s5) that sends the document model with terms and conditions therein to a client.

## Description

The invention relates generally to an automated document drafting system and method. In particular, the invention relates to an automated document drafting system and method utilizing networked-based tools.

Document drafting, such as but not limited to agreement or contract drafting, and subsequent negotiation is a detail oriented, time consuming, and often frustrating endeavor. However, the need for a precise document is essential and the risks associated with improper and inaccurate documents are very large. The risk is especially magnified for large law firms and companies in which a volume of business is very high. These law firms and companies may offer a sundry of technologies, services, products, and goods, all of which may require specific, individualized, and precise contractual terms, conditions, and requirements.

Generally, law firms and companies that draft documents maintain libraries of documents. These libraries have volumes of notebooks, files, books, and other paper file retention devices for storing documents and various terms and conditions. The terms and conditions that are used by these law firms and companies in creating these documents may not be stored in a central file location. The terms and conditions may be located at decentralized business divisions or law offices and thus not readily obtainable by all parties who would like access to them. Even if stored at some central file location, there may be few means to guarantee integrity of the file and terms and conditions. A person at the law firm or company may remove some or the entire file for creating a document. These missing files and terms and conditions may be lost, incorrectly replaced, or never replaced. Thus, the files and terms and conditions are not available for the next person at the law firm or company to draft a document, which of course is undesirable.

Further, these central file locations and files are not generally accessible outside of a main office. If a party is travelling, working outside of the office, or drafting a document from a location remote from the central file location, the party will generally be unable to use the files. Thus, document drafting and work away form the central file location of the law firm or company is complicated and very difficult.

This prior system also leads to lack of uniformity and incomplete control over risk mitigation provisions. For example, use of project specific files will often reflect compromises that may not be applicable in all cases. It will be difficult for a law firm or company to impose firm or company wide policy resolution of certain issues. Even if the law firm or company adopts a "standardized" form, it may be difficult to ensure that it is used for all transactions for many of the same reasons already noted with respect to use of non-uniform filing systems and so forth.

A drafted document may be incomplete if a law firm or company relies on such paper or hardcopy forms in drafting documents in which the file integrity is compromised from one of the above-noted causes of missing files. Of course, many similar things can occur even if one converts hard copy to electronic forms. The drafted document may have "holes" therein, in which the holes are missing or incomplete contractual matters. These holes may be created by missing terms and conditions, entire clauses, or sections omitted inaccurate or outdated terms and conditions being included, or other defects in document language.

These document holes can lead to a loss of efficiency in that the document will have to be re-drafted and possibly re-negotiated to insert the desired terms and conditions that were omitted and causes the holes. The loss in efficiency may be further reflected in diversion of resources to preparing a new or revised document, diversion of resources from working on new documents to re-draft the document, and similar diversions.

Further, the document holes can lead to inadequate mitigation of potential risks and increased possible risks, such as, but not limited to, commercial and legal risks. These commercial and legal risks include, but are not limited to, export regulation risks, inadequate or incomplete allocation of risks and liabilities, environmental risks, antitrust risks, commercial risks arising from not getting sufficient royalties or payments, inaccurate reflections of the deal that is behind the document, and combinations thereof.

Additionally, law firm's or company files containing document terms and conditions are often in paper or hardcopy form. The terms and conditions may not be well indexed, and even if they are well indexed, they need to be maintained for any value to be derived from the files. Disorganization in the law firm or company files will decrease efficiency of the document drafting process as searching paper or hardcopy forms is required to find the appropriate terms and conditions needed for the particular document and contractual situation. Moreover, once the appropriate terms and conditions are located in the paper or hardcopy of the central file location, they must be transcribed into the draft document. This transcription process is a time consuming process and can lead to potential errors in the transcribed copies. Additionally, use of electronic copies may result in similar undesirable influences.

The transcription of the terms and conditions may lead to errors and holes in the drafted document. Further, the transcription of the terms and conditions may represent a loss in efficiency, especially if the document drafting party, typically an attorney must do the actual transcription himself or herself. Once the lengthy transcription as occurred, the document drafter must then proof the terms and conditions to make sure that they have been properly transcribed. Once that proofing step is complete, modifications may then be made to the terms and conditions, to conform them to the contractual situation that has been presented. These multiple manual steps clearly represent an efficiency loss and resource diversion in the entire document drafting process.

Therefore, a need exists for a system or means to avoid incomplete terms and conditions in documents that could result in undesirable "holes". Further, a need exists for providing reliable accessible means for decentralized access to document files and terms and conditions for drafting documents.

An aspect of the invention provides a system for document drafting, in which the system comprises a document model selector that selects a document model to be drafted; a terms and conditions selector that places terms and conditions in the document model; and a transmission device that sends the document model with terms and conditions therein to a client.

A further aspect of the invention sets forth a method for document drafting, wherein the method comprises selecting a document model to be drafted; placing terms and conditions in the document model; and sending the document model with terms and conditions therein to a client.

Another aspect of the invention provides system for document drafting, in which the system comprises document model selector means for selecting a document model to be drafted; terms and conditions selector means for placing terms and conditions in the document model; and transmission means for sending sends the document model with terms and conditions therein to a client.

A further aspect of the invention provides a system for document drafting. The system comprises a document model selector that selects a document model to be drafted; a terms and conditions selector that places terms and conditions in the document model, the terms and conditions selector limits the terms and conditions that can be added to a document model; at least one revision device for revising the document model; negotiation mechanisms for negotiating terms and conditions of the document model with a client if the document model sent to the client; at least one retention device for saving information in the document model in a document model database; a transmission device that sends the document model with terms and conditions therein to a client; wherein the document model selector is capable of selecting a document model via a network connection, the document model selector is capable of selecting a document model from a plurality of document models in which the plurality of document models are disposed in a document model database; and a signature mechanism that provides signatures in the document model.

These and other aspects, advantages and salient features of the invention will become apparent from the following detailed description in conjunction with the annexed drawings, in which:

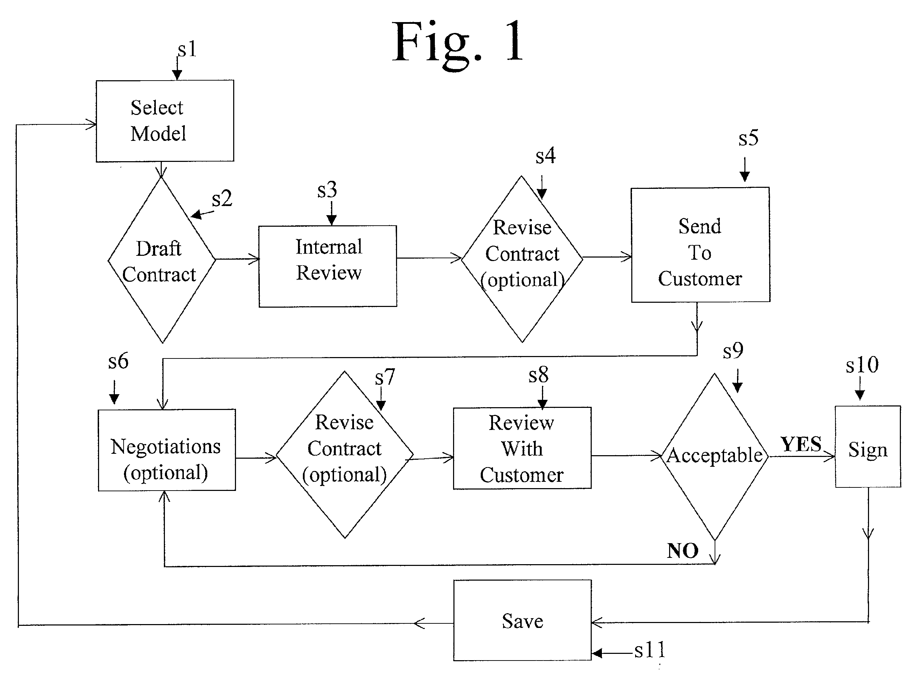

Figure 1 is a process follow chart for the automated document drafting system, as embodied by the invention.

The automated document drafting system, as embodied by the invention, comprises a system that provides structure, software, hardware, means, and an automated process to generate terms and conditions for letters of intent, documents of all nature, binding instruments, intent to offer (ITO), powers of attorney, customer proposals, and other such documents including but not limited to contracts and other documents (hereinafter referred to as "documents"). The above list of documents is intended to limit the invention in any manner and is merely provided for exemplary purposes. The automated document drafting system can provide common terms and conditions, and thus increase efficiency. Further, the automated document drafting system, as embodied by the invention, can reduce risks generally associated with document drafting, by providing standardized, common, required, and preferred document terms and conditions.

The automated document drafting system, as embodied by the invention, can be accessed via a network as the automated document drafting system and is intended to be a network-based tool. The network can comprise, but is not limited to, an Intranet network; an Internet website, such as a password or non-password protected website; a local network, such as two or more computers that are connected together; any other interconnected electrical facilities, such as, but not limited to, telephones, telex machines, computer terminals, chains of transmitters interconnected so that they can provide the same program materials; and combinations thereof. This list of possible networks is not intended to limit the invention in any manner. The automated document drafting system, as embodied by the invention, can be accessed by any other appropriate network.

The automated document drafting system and its associated method of use for drafting a document, as embodied by the invention, will be described with reference to Fig. 1. The description of the Figure 1 is a process flowchart for the automated document drafting system and method, as embodied by the invention. A user of the automated document drafting system will select a document "model" from a document storage database in step S1 using a document model selector. The selection of a document model means that the user of the automated document drafting system, as embodied by the invention, will select a type of document to be drafted after connecting to the automated document drafting system via a network connection, as discussed above.

The types of document models include, but are not limited to, documents for sale, technology transfers, technology development agreements, conditional documents, construction documents, real estate documents, documents of record, purchase orders, power of attorneys, various agreements, such as agreements of sale, agreements to sell, non-disclosure agreements, and other promissory agreements, along with internally required reports and other documents related to the transactions in question. The automated document drafting system, as embodied by the invention, can be used with any appropriate document model. The above list is merely exemplary, and is not intended to limit the invention in any manner.

Once a user of the automated document drafting system, as embodied by the invention, accesses the automated document drafting system, the user may be asked to log into the automated document drafting system. Alternatively, the automated document drafting system, as embodied by the invention, may be provided with means to automatically determine the user of the automated document drafting system. Once the user of the automated document drafting system is identified, the automated document drafting system can provide the user with access to document models appropriate for the user. For example, the automated document drafting system may provide limited access to certain types of documents, dependent on the user, their clearance, or expertise. A document for international sale may not be made accessible for drafting by an employment law paralegal, and may only be made available certain sales department users. However, the automated document drafting system, as embodied by the invention, can provide standardized terms and conditions for desired document models, so that any user may generate groundwork of a document.

The automated document drafting system, as embodied by the invention, may limit ability to modify various terms and conditions of certain document models, depending on the particular terms and conditions. For example, the automated document drafting system may not allow a change in applicable choice of law if a party must have the law of a particular venue. Further, automated document drafting system, as embodied by the invention, may limit ability to modify various terms and conditions of certain document models, depending on the identity of the user. For example, to change liability limits, the user may have to be an officer of the company or a partner in the law firm. These modification limitations are merely exemplary of the capabilities of the automated document drafting system, as embodied by the invention, and are not intended to limit the invention in any manner. Further modification limitations are within the scope of the invention.

The automated document drafting system may be password protected so that only certain users can access the automated document drafting system. Alternatively, the automated document drafting system, as embodied by the invention, may be encrypted to provide security thereto. Additionally, both password and encryption may be provided to enhance the security of the automated document drafting system. While such security of the automated document drafting system can be provided, it is not necessary for the functionality of the automated document drafting system. Further, other appropriate security means can be provided in the automated document drafting system, as embodied by the invention.

The user of the automated document drafting system, as embodied by the invention, will be requested to choose a document model to be drafted once they have entered the network. The document models, as embodied by the invention, can be stored in the document storage database, which is accessible by the automated document drafting system. The database can comprise a various agreement templates depending on the desired document to be drafted by the automated document drafting system. Therefore, a first step of the automated document drafting system after gaining access is to select a document model type.

Further, the automated document drafting system, as embodied by the invention, can include means defining the document storage database. The database can store information so that the automated document drafting system can re-use data for multiple documents that relate to the same transaction. For example, and in no way limiting of the invention, the data base of the automated document drafting system can store information for creating a confidentiality agreement, in which a sales person merely enters the customer's name. When the automated document drafting system is used to create further documents, such as a letter of intent, the automated document drafting system, as embodied by the invention, can re-use the customer's name without necessitating re-input.

For example, and in no way limiting of the automated document drafting system, a document model type may comprise a document in the form of a purchase order. This type of document may include modes or fields to select and input information into the automated document drafting system, as embodied by the invention. The modes or fields (hereinafter used interchangeably) may comprise drop-down boxes from which a user of the automated document drafting system, as embodied by the invention, may input and select appropriate data, terms and conditions, and other contractual clauses to be included in the document. Alternatively, the automated document drafting system, as embodied by the invention, may provide further screens for a user of the automated document drafting system to input and select data, terms and conditions, and other clauses. These modes or fields are merely exemplary of appropriate manners of inputting and selecting information into the automated document drafting system. They are not intended to be limiting and other modes or fields are within the scope of the invention.

Once the document model has been selected in step S1, the drafting of the document by the automated document drafting system can begin in step S2 by a terms and conditions drafting mechanism. Certain terms and conditions may be automatically placed within the document in step S2 dependent on the type of document model that has been selected. As an example, and in no way limiting f the invention, certain terms and conditions will be generated if the document model is an employment document and other distinct terms and conditions will be generated into the document if the document model is a document for sale. Some terms and conditions may be generic to all document models, such as arbitration clauses.

If the automated document drafting system is being used by a large multi-business company, the drafting of the document in step S2 may comprise a pull-down box, which can prompt the user to select the business or division of the company. This business or division selection may automatically provide other terms and conditions and details to the automated document drafting system, as embodied by the invention, such as, but not limited to, business address, state of incorporation, choice of law clause, names and addresses for contacts, and other location specific terms and conditions. The above terms and conditions are merely exemplary of the terms and conditions that can be business or division specific. These are not intended to limit the invention in any manner.

The drafting of the document in step S2 may also comprise modes or fields for entering client information, in which the term client means the party other than the user of the automated document drafting system to the document. The client information can be generated by the automated document drafting system, as embodied by the invention, from a database of client information in the automated document drafting system, in which the database of client information may be complied from previous documents. The database of client information can be inputted from earlier documents, either manually generated or generated using the automated document drafting system, as embodied by the invention. If the automated document drafting system retrieves and/or stores client information into the database, the automated document drafting system is provided with appropriate functionality to access the database of client information, retrieve information therefrom, and add or update information therein.

The automated document drafting system, as embodied by the invention, may be provided with means to obtain client information, for example and in no way limiting of the invention from an external (to the automated document drafting system) system or means. The means to obtain client information can be used if the database of client information does not contain client information or one believes that the information is out of date. Exemplary and non-limiting means for obtaining client information comprises, but is not limited to, accessing the client information via the Internet, Dun and Bradstreet, or other such source of client specific information.

The drafting of the document in step S2 for the automated document drafting system may provide other detailed contractual terms and conditions dependent on the business. For example, and in no way limiting of the invention, if the business sells engines of various sizes, engine parts, engine services, and related engine technology, the automated document drafting system can provide modes and fields for these units. The automated document drafting system may include modes and field for each part, product, and service offered, such as but not limited to, type and other specifics of the unit to be purchased, price, applicable discounts, quantity, desired delivery date, delivery location, shipment method, associated engine technology, and other unit terms and conditions.

Further, the automated document drafting system may also provide terms and conditions for guarantees, such as guarantees with respect to unit performance and unit delivery. These unit specific guarantee terms and conditions may comprise any appropriate field or mode. Alternatively, the unit specific guarantee terms and conditions may comprise input boxes into which a user of the automated document drafting system can enter such information.

Additionally, the automated document drafting system, as embodied by the invention, may contain temporal information for the document being drafted in step S2. For example, the automated document drafting system can provide fields and modes into which a user of the automated document drafting system provides desired dates for execution of the document. The automated document drafting system may also comprise a last date field or mode into which a user of the automated document drafting system inputs the final date not which the client must sign the document or the offer is void. While the above temporal data and dates are discussed, they are merely for examples, and are not intended to limit the invention in any manner. Other appropriate temporal data and date fields and modes are within the scope of the invention.

A final step in the drafting of the document in step S2 for the automated document drafting system may comprise one or more prompts to complete the drafting of the document by the automated document drafting system, as embodied by the invention. These prompts include, but are not limited to, prompts for generating, saving, downloading, printing, and sending (via any appropriate means) the document. The prompts may automatically do one or more of the above functions to further enhance and save resources, such as time.

Once the draft document has been generated by the automated document drafting system, as embodied by the invention, it can be internally reviewed, if necessary, in step S3. The review can be done by a user or by a user's colleagues and supervisor, and combinations thereof.

The document, which was drafted and generated in step S2, may then be revised, if necessary in step S4. The revision is based on the internal review. The revision can be conducted by using the same fields and modes that were used in drafting of the document in step S2. Alternatively, the revision can be conducted by editing a stored version of the document, for example as one edits a document using a word processor system. The method of revision, which of course is only done if necessary, can be conducted by any appropriate method, and other revision methods are within the scope of the invention.

Once any document has been prepared and is in a "final" condition, the document can be sent to the client in step S5 by a transmission device. The sending of the document to the client can be done automatically through the automated document drafting system, as it can comprise e-mail functionality. Alternatively, the sending of the document to the client can be done automatically through the automated document drafting system, as it can comprise facsimile functionality. Alternatively, the automated document drafting system, as embodied by the invention, can download the document result to a computer and then e-mail it or post it in a web-based application. A further alternative for the sending of the document to the client is to print out and send the document to the client via traditional mail or courier processes.

The client will review the document that has been generated by the automated document drafting system. If the document is acceptable, in step S9, the document is signed in step S10. Once the document has been signed, the data of the document in the automated document drafting system, as embodied by the invention, is finalized and the terms and conditions of the document and other details are stored by the automated document drafting system. Thus, the terms and conditions that have been agreed to by the client are memorialized. Accordingly, client particulars, especially if first developed by a first entry of client information into the automated document drafting system, is stored and available for the user, or other users of the automated document drafting system, to reference during drafting of a document in step S2. If the document sent to the client in step S5 is not acceptable to the client, typically negotiations are conducted in step S6. The negotiations may result in modification of the document terms, including terms generated using various fields and modes of the automated document drafting system in step S2. The document may be revised in step S7 in a similar manner as revised in step S4.

The revision of the document in step S7 may be conducted contemporaneously with negotiations with the client in step S6. For example, a user of the automated document drafting system, as embodied by the invention, may have the automated document drafting system loaded into their computer and bring the computer to the negotiations. Alternatively, a user of the automated document drafting system, as embodied by the invention, may have the automated document drafting system accessed via a network connection if negotiations occur at the user's site. Further, a user of the automated document drafting system, as embodied by the invention, may have the automated document drafting system accessed via an Internet connection during the negotiations. The above are merely exemplary of accessing the automated document drafting system for further revision of the document after or during negotiations with n the scope of the invention.

Following revision in step S7, the document is again reviewed with the client (if necessary) in step S8. If the document is still not acceptable further negotiations, revisions, ad review (steps S6-S8) are conducted until the document is acceptable in step S9. Once the document that has been generated by the automated document drafting system, as embodied by the invention, is acceptable in step S9, and signed in step S10, the data of the document in the automated document drafting system, as embodied by the invention, is finalized and the terms and conditions of the document and other details are stored by the automated document drafting system. Thus, the terms and conditions that have been agreed to by the client are memorialized, as described above. Accordingly, client particulars, especially if first developed by a first entry of client information into the automated document drafting system, is stored and available for the user, or other users of the automated document drafting system, to reference during drafting of a document in step S2.

The automated document drafting system, as embodied by the invention, further can comprise means for saving at least one of: inserting a date and time of revision; identifying the person who has drafted the document, modified the document, and reviewed the document, and track changes. Further, the automated document drafting system, as embodied by the invention, may comprise means to notify appropriate personnel to approve changes, for example, but not limited to supervisory personnel, if certain terms are changes and the terms have been identified as required or mandatory terms for a document. The automated document drafting system may also comprise e-mail capability and e-mail routing tracking of document versions so the automated document drafting system can provide a path through which the document has traveled in its preparation. Thus, the automated document drafting system is a trackable, auditable, and digitized tool.

Further, the automated document drafting system, as embodied by the invention, may be used to prepare domestic contacts and international documents. The automated document drafting system may comprise separate templates for each of domestic contacts and international documents. Furthermore, the automated document drafting system, as embodied by the invention, can comprise other templates for other various types of agreements, documents, and documents. The automated document drafting system, as embodied by the invention, is not limited to any particular document format, and the scope of the invention includes the automated document drafting system being able to draft any appropriate agreement.

The automated document drafting system, as embodied by the invention, can be customized so that a user may share various functions of the system, for example but not limited by, modification and editing of a document, with a client. For example, but in no way limiting of the invention, the client may be able to modify certain term and conditions of the document. Further, the client may be prevented from modifying various terms and conditions of the document. For example, the client may be notified that the respective term or condition is not modifiable or "overwritable" by them and must be discussed with the automated document drafting system owner if they would like to modify the document. Thus, the client has notice that a term or condition is not generally subject to modification.

Further, the automated document drafting system, as embodied by the invention, may be provided with means to accommodate electronic signatures. Thus, the automated document drafting system can be used to execute documents by both the automated document drafting system owner and the client. Accordingly, it is possible that all document negotiations, including the final execution of the document, can be accomplished, if desired, over a network.

Additionally, the automated document drafting system, as embodied by the invention, provides means that necessary terms and conditions are included in a draft document, by providing these terms and conditions in the document model that is selected. For example, and in no way intended to limit the invention in any manner, if the document is intended to be an international sales document, an international sales document model is selected. This international sales document model may include terms and conditions for international choice of law, international arbitration clauses, and other such appropriate terms for an international sales document. The above listing of terms and conditions is merely exemplary and is not intended to limit the invention in any manner.

Another feature of the automated document drafting system, as embodied by the invention, comprises storage capability for compiling records of documents drafted, terms and conditions desired and refused for various clients, and other such record keeping functions. The storage capability of the automated document drafting system permits enhanced preparation of a draft agreement for a particular client. For example, the automated document drafting system can retrieve pertinent bibliographic data for a particular client. Further, if a particular client requires certain terms and conditions that are acceptable for a user, the automated document drafting system, as embodied by the invention, can pull those up with into the model document once the particular client is identified in the appropriate step, for example step S2.

A still further feature of the automated document drafting system, as embodied by the invention, provides means for updating terms and conditions. The updating may be a result of any occurrence, for example, but not limited to, legal precedent, change of legal entity status, change of laws, and other occurrences that would make it desirable to change the terms and conditions in the automated document drafting system. The above list is, of course, merely exemplary of occurrences that would make it desirable to change the terms and conditions in the automated document drafting system, and is not intended to limit the invention in any manner.

Therefore, the automated document drafting system, as embodied by the invention, provides a user-friendly, accelerated document drafting process that can expedite document drafting and any negotiation processes. For example, if the automated document drafting system comprises acceptable terms and conditions to the owner of the automated document drafting system, sales staff of the owner of the automated document drafting system can use it to draft sales documents without initial legal intervention. This process should expedite document drafting and enhance efficiency. Further, legal staff time can be spent in reviewing finalized documents, and if the automated document drafting system, as embodied by the invention, drafts a document for review the legal staff can readily see if any standard terms and conditions, which were previously approved as acceptable, were modified. For example, if nothing in the standard terms and conditions have been changed, legal review may not be required. Further, legal review need only be directed at those terms and conditions that have been modified, and the automated document drafting system, as embodied by the invention, can automatically provide modification information to the legal staff.

For completeness, various aspects of the invention are set out in the following numbered clauses:
1. A system for document drafting, the system comprising:
   a document model selector that selects a document model to be drafted;
   a terms and conditions selector that selects and places terms and conditions in the document model; and
   a transmission device that sends the document model with terms and conditions therein to a client.
2. A system according to clause 1, wherein the document model selector is capable of selecting a document model via a network connection.
3. A system according to clause 1, wherein the document model selector is capable of selecting a document model from a plurality of document models.
4. A system according to clause 3, wherein the plurality of document models are disposed in a document model database.
5. A system according to clause 1, wherein the system for document drafting is password protected.
6. A system according to clause 1, wherein the terms and conditions selector limits the terms and conditions that can be added to a document model.
7. A system according to clause 1, wherein the terms and conditions selector comprises pull-down boxes.
8. A system according to clause 1, wherein the terms and conditions selector comprises client information to complete the document model.
9. A system according to clause 8, wherein the client information to complete the document model comprise client information from a system external from the system for document drafting.
10. A system according to clause 1, further comprising a signature mechanism that provides signatures in the document model.
11. A system according to clause 10, wherein the signature mechanism that provides signatures in the document model comprises an electronic signature mechanism.
12. A system according to clause 1, further comprising at least one revision device for revising the document model.
13. A system according to clause 1, further comprising negotiation mechanisms for negotiating terms and conditions of the document model with a client if the document model sent to the client.
14. A system according to clause 1, further comprising at least one retention device for saving information in the document model in a document model database.
15, A system according to clause 14, wherein the plurality of document models are disposed in the document model database.
16. A method for document drafting, the method comprising:
   selecting a document model to be drafted;
   selecting and placing terms and conditions in the document model; and
   sending the document model with terms and conditions therein to a client.
17. A method according to clause 16, wherein the step of selecting comprises selecting a document model via a network connection.
18. A method according to clause 16, wherein the step of selecting comprises selecting a document model from a plurality of document models.
19. A method according to clause 18, wherein the plurality of document models are disposed in a document model database.
20. A method according to clause 16, wherein the method for document drafting is password protected.
21. A method according to clause 16, wherein the step of selecting a document model to be drafted limits the terms and conditions that can be added to a document model.
22. A method according to clause 16, wherein the step of selecting a document model to be drafted comprises selecting terms and conditions from pull-down boxes.
23. A method according to clause 16, wherein the step of placing terms and conditions in the document model selector comprises placing client information to complete the document model.
24. A method according to clause 23, wherein the step of placing client information to complete the document model comprises obtaining client information from a system external source.
25. A method according to clause 16, further comprising a step of providing signatures in the document model.
26. A method according to clause 16, wherein the step of providing signatures comprises providing an electronic signature.
27. A method according to clause 16, further comprising at least one revision device for revising the document model.
28. A method according to clause 16, further comprising a step of negotiating terms and conditions of the document model with a client.
29. A method according to clause 16, further comprising a step of saving information in the document model in a document model database.
30. A system for document drafting, the system comprising:
   document model selector means for selecting a document model to be drafted;
   terms and conditions selector means for selecting and placing terms and conditions in the document model; and
   transmission means for sending sends the document model with terms and conditions therein to a client.
31. A system according to clause 30, wherein the document model selector means is capable of selecting a document model via a network connection.
32. A system according to clause 30, wherein the document model selector means is capable of selecting a document model from a plurality of document models.
33. A system according to clause 32, wherein the plurality of document models are disposed in a document model database.
34 A system according to clause 30, wherein the system for document drafting is password protected.
35. A system according to clause 30, wherein the terms and conditions selector means limits the terms and conditions that can be added to a document model.
36. A system according to clause 30, wherein the terms and conditions selector means comprises pull-down boxes.
37. A system according to clause 30, wherein the terms and conditions selector means comprises client information to complete the document model.
38. A system according to clause 37, wherein the client information to complete the document model comprise client information from external means.
39. A system according to clause 30, further comprising a signature means for providing signatures in the document model.
40. A system according to clause 39, wherein the signature means that provides signatures in the document model comprises an electronic signature means.
41. A system according to clause 30, further comprising at least one revision means for revising the document model.
42. A system according to clause 30, further comprising negotiation means for negotiating terms and conditions of the document model with a client.
43. A system according to clause 30, further comprising at least one retention means for saving information in the document model in a document model database.
44. A system according to clause 43, wherein the plurality of document models are disposed in the document model database.
45. A system for document drafting, the system comprising:
   a document model selector that selects a document model to be drafted;
   a terms and conditions selector that selects and places terms and conditions in the document model, the terms and conditions selector limits the terms and conditions that can be added to a document model;
   at least one revision device for revising the document model;
   negotiation mechanisms for negotiating terms and conditions of the document model with a client if the document model sent to the client;
   at least one retention device for saving information in the document model in a document model database; and
   a transmission device that sends the document model with terms and conditions therein to a client; wherein the document model selector is capable of selecting a document model via a network connection, the document model selector is capable of selecting a document model from a plurality of document models in which the plurality of document models are disposed in a document model database; and a signature mechanism that provides signatures in the document model.
46. A system according to clause 45, wherein the signature mechanism that provides signatures in the document model comprises an electronic signature mechanism.

## Claims

1. A system for document drafting, the system comprising:
a document model selector that selects a document model to be drafted;
a terms and conditions selector that selects and places terms and conditions in the document model; and
a transmission device that sends the document model with terms and conditions therein to a client.

2. A system according to claim 1, wherein the terms and conditions selector limits the terms and conditions that can be added to a document model.

3. A system according to claim 1, wherein the terms and conditions selector comprises client information to complete the document model.

4. A system according to claim 1, further comprising a signature mechanism that provides signatures in the document model.

5. A system according to claim 1, further comprising negotiation mechanisms for negotiating terms and conditions of the document model sent to the client.

6. A method for document drafting, the method comprising:
selecting a document model to be drafted;
selecting and placing terms and conditions in the document model; and
sending the document model with terms and conditions therein to a client.

7. A method according to claim 6, wherein the step of selecting comprises selecting a document model from a plurality of document models in a document model database.

8. A method according to claim 6, further comprising a step of negotiating terms and conditions of the document model with a client.

9. A system for document drafting, the system comprising:
a document model selector that selects a document model to be drafted;
a terms and conditions selector that selects and places terms and conditions in the document model, the terms and conditions selector limits the terms and conditions that can be added to a document model;
at least one revision device for revising the document model;
negotiation mechanisms for negotiating terms and conditions of the document model with a client if the document model sent to the client;
at least one retention device for saving information in the document model in a document model database; and
a transmission device that sends the document model with terms and conditions therein to a client; wherein the document model selector is capable of selecting a document model via a network connection, the document model selector is capable of selecting a document model from a plurality of document models in which the plurality of document models are disposed in a document model database; and a signature mechanism that provides signatures in the document model.

10. A system according to claim 9, wherein the signature mechanism that provides signatures in the document model comprises an electronic signature mechanism.
